# EUROPEAN PATENT APPLICATION

(11) **EP 4 411 978 A1**
(43) Date of publication of application: **07.08.2024**
(21) Application number: 23846916.7
(22) Date of filing: 20.07.2023
(51) Int. Cl.: H01M 50/593, H01M 50/103, H01M 50/15, H01M 50/553, H01M 50/531

(54) **PRISMATIC SECONDARY BATTERY HAVING IMPROVED SAFETY**

(30) Priority: 28.07.2022 KR 20220093592
(71) Applicant: LG Energy Solution, Ltd., Seoul 07335 (KR)
(72) Inventor: PARK, Ji Min, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/010524
(87) International publication number: WO 2024/025257

(57) **Abstract**

Provided is a prismatic secondary battery, in one example the prismatic secondary battery including: a case including an opening; an electrode assembly stored within the case; and a cap plate coupled to the opening in the case, and having electrode terminals of a positive electrode and a negative electrode, and is provided with at least one of: an upper insulator occupying a first space between the cap plate and an upper surface of the electrode assembly, and a second space between the case and at least two opposing surfaces among front, back, left and right surfaces of the electrode assembly, and a lower insulator occupying a third space between a bottom surface of the case and a lower surface of the electrode assembly, and a fourth space between the case and at least two opposing surfaces among the front, back and left surfaces of the electrode assembly.

## Description

### CROSS-REFERENCE TO RELATED APPLICATIONS

This application is a National Phase entry of International Application No. PCT/KR2023/010524 filed on July 20, 2023, which claims priority to and the benefit of Korean Patent Application No. 10-2022-0093592, filed on July 28, 2022. The contents of the above-identified applications are herein incorporated by reference in their entireties.

### TECHNICAL FIELD

The present disclosure relates to a prismatic secondary battery with improved safety by preventing internal fluctuations of an electrode assembly.

### BACKGROUND

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a chargeable and dischargeable power generator consisting of a laminated structure of electrodes and separators.

Electrode assemblies can be roughly categorized into Jellyroll type, which is wound by interposing a separator between a positive electrode and negative electrode of an active material-coated sheet, Stack-type in which a plurality of positive electrodes and negative electrodes is sequentially stacked with a separator interposed therebetween, and Stack & Folding type in which stack-type unit cells are wound with a long separator film.

The positive and negative tabs of the electrode assembly housed in the prismatic secondary battery are bonded to the electrode leads and connected to the positive and negative terminals on the case, respectively. In the case accommodating the electrode assembly, some clearance is formed by the space for the electrical connection of the electrode assembly and the required amount of electrolyte. Therefore, the electrode assembly in the case is subjected to a fluctuation or slip phenomenon (slip phenomenon) due to external impact. In particular, prismatic secondary batteries used in hybrid vehicles and electric vehicles are subjected to frequent fluctuation phenomena due to impacts during driving.

The structural support of the electrode assembly is primarily provided by the positive and negative tabs (electrode tabs) connected to the positive and negative electrode terminals. Because of this, any fluctuation in the electrode assembly can cause stresses to be concentrated on the electrode tabs, which can lead to problems such as tab tears, shorts due to electrical contact, or the like. In addition, damage to the tabs can also cause a reduction in the capacity of the secondary battery or an imbalance between a plurality of batteries in a battery pack, which can lead to various reliability issues that ultimately reduce the life of the battery.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

The purpose of the present disclosure is to improve the support structure of an electrode assembly stored inside a prismatic secondary battery, so that it can suppress fluctuations during use.

However, the technical problems that the present disclosure seeks to address are not limited to those described above, and other problems not mentioned will be apparent to those of ordinary skill in the art from the following description of the embodiments.

The present disclosure relates to a prismatic secondary battery, in one example the prismatic secondary battery including: a case including an opening; an electrode assembly stored within the case; and a cap plate coupled to the opening in the case, and having electrode terminals of a positive electrode and a negative electrode, and is provided with at least one of: an upper insulator occupying a first space between the cap plate and an upper surface of the electrode assembly, and a second space between the case and at least two opposing surfaces among front, back, left and right surfaces of the electrode assembly, and a lower insulator occupying a third space between a bottom surface of the case and a lower surface of the electrode assembly, and a fourth space between the case and at least two opposing surfaces among the front, back and left surfaces of the electrode assembly.

The upper insulator and the lower insulator suppress at least one of front-to-back fluctuations and side-to-side fluctuations of the electrode assembly, respectively.

For example, one of the upper insulator and the lower insulator may suppress front-to-back fluctuations of the electrode assembly and the other suppresses side-to-side fluctuations.

Or, the upper insulator and the lower insulator may suppress at least one of front-to-back fluctuations and side-to-side fluctuations of the electrode assembly.

In an exemplary embodiment of the present disclosure, the upper insulator may include: a base part corresponding to the upper surface of the electrode assembly, and a side part bent and extending from at least two sides of the base part.

Here, it may be preferable that the side part of the upper insulator does not encroach on a coated part of the electrode assembly.

In addition, the lower insulator may include: a base part corresponding to the lower surface of the electrode assembly, and a side part bent and extending from at least two sides of the base part.

Here, it may be preferable that the side part of the lower insulator does not encroach on a coated part of the electrode assembly.

In another exemplary embodiment of the present disclosure, the upper insulator may include: a base part corresponding to the upper surface of the electrode assembly, and a corner part bent and extending along at least two diagonal corners of the base part.

Here, it may be preferable that the corner part of the upper insulator does not encroach on a coated part of the electrode assembly.

In addition, the lower insulator may include: a base part corresponding to the lower surface of the electrode assembly, and a corner part bent and extending along at least two diagonal corners of the base part.

Here, it may be preferable that the corner part of the lower insulator does not encroach on a coated part of the electrode assembly.

In addition, the upper insulator and the lower insulator may be composed of a material that expands by contacting with an electrolyte in the case.

In yet another exemplary embodiment of the present disclosure, the upper insulator is provided with an electrode connecting part penetrating through a base part corresponding to the upper surface of the electrode assembly, wherein the electrode connecting part may be electrically connected with a tab connecting part that is provided on an inner surface of the base part and disposed opposing an electrode tab of the electrode assembly.

The electrode connecting part and the tab connecting part are each provided in a pair, and the paired electrode connecting part and the tab connecting part are electrically connected to electrode terminals and electrode tabs, respectively, of a same polarity.

The prismatic secondary battery of the present disclosure with the configuration as described above includes an upper insulator and/or a lower insulator that fills the space existing in the upper and/or lower part of the electrode assembly, and the upper/lower insulator suppresses the fluctuation of the electrode assembly, thereby improving the support structure, so that the fluctuation phenomenon during use is suppressed and various problems such as shorts or tearing of tabs due to electrical contact are prevented, thereby greatly improving the safety of the secondary battery.

However, the technical effects of the present disclosure are not limited to those described above, and other effects not mentioned will be apparent to one of ordinary skill in the art from the following description of the embodiments.

### BRIEF DESCRIPTION OF THE DRAWINGS

The following drawings accompanying this specification illustrate preferred exemplary embodiments of the present disclosure and are intended to serve as a further understanding of the technical ideas of the present disclosure in conjunction with the detailed description of the embodiments that follows, so the present disclosure is not to be construed as limited to what is shown in such drawings.
FIG. 1 is an exploded perspective view of a prismatic secondary cell according to an exemplary embodiment of the present disclosure.
FIG. 2 is a diagram illustrating an exemplary embodiment of an upper insulator.
FIG. 3 is a diagram illustrating an exemplary embodiment of an upper insulator.
FIG. 4 is a diagram illustrating an exemplary embodiment of an upper insulator.
FIG. 5 is a diagram illustrating an exemplary embodiment of a lower insulator.
FIG. 6 is a diagram illustrating an exemplary embodiment of a lower insulator.
FIG. 7 is a diagram illustrating an exemplary embodiment of a lower insulator.
FIG. 8 is a diagram illustrating an exemplary embodiment in which an upper insulator and a lower insulator are combined.
FIG. 9 is a diagram illustrating an exemplary embodiment in which an upper insulator and a lower insulator are combined.
FIG. 10 is a diagram illustrating another exemplary embodiment of the upper and lower insulators.
FIG. 11 is a diagram illustrating another exemplary embodiment of an upper insulator.
FIG. 12 is a diagram illustrating a structure in which an electrode terminal and electrode tab are coupled to the upper insulator of FIG. 11.

### DETAILED DESCRIPTION

The present disclosure may have various modifications and various examples, and specific examples are illustrated in the drawings and described in detail in the description.

However, it should be understood that the present disclosure is not limited to specific embodiments, and includes all modifications, equivalents or alternatives within the spirit and technical scope of the present disclosure.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a prismatic secondary battery, which in one example the prismatic secondary battery includes: a case including an opening, an electrode assembly stored within the case, and a cap plate coupled to the opening in the case, and having electrode terminals of a positive electrode and a negative electrode.

Here, the prismatic secondary battery of the present disclosure includes at least one of an upper insulator and a lower insulator.

The upper insulator occupies the space between the cap plate and the upper surface of the electrode assembly, and the space between the case and at least two of the front, back, left and right surfaces of the electrode assembly that are opposed to each other.

And, the lower insulator occupies the space between the bottom surface of the case and the lower surface of the electrode assembly, and the space between the case and at least two opposing surfaces among the front, back, left and right surfaces of the electrode assembly.

As such, in the prismatic secondary battery of the present disclosure, the upper and lower insulators are interposed in the gap between the cases present on the upper and lower parts of the electrode assembly to suppress the fluctuation of the electrode assembly, and as such, the support structure of the electrode assembly is improved and the fluctuation phenomenon during use is suppressed, thereby preventing various problems such as shorts and tearing of tabs due to electrical contact, and as a result, the safety of the secondary battery is greatly improved.

Hereinafter, specific embodiments of the present disclosure will be described in detail with reference to the accompanying drawings. For reference, the directions of front, back, up, down, left, and right used in the following description to designate relative positions are intended to aid in the understanding of the disclosure, and refer to the directions shown in the drawings unless otherwise specified.

### First Embodiment

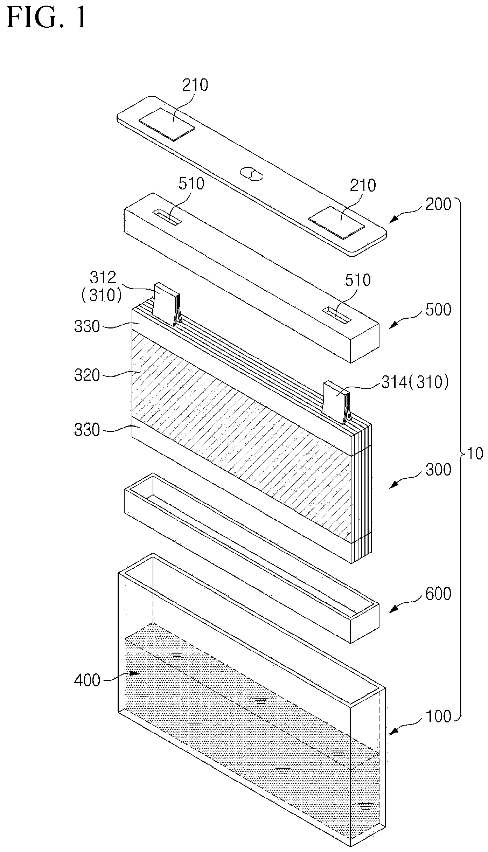

FIG. 1 is an exploded perspective view of a prismatic secondary battery 10 according to an exemplary embodiment of the present disclosure.

The prismatic secondary battery 10 shown includes a case 100 having at least one opening, and an electrode assembly 300 is stored within the case 100 through the opening of the case 100. And, it includes a cap plate 200 coupled to seal the opening in the case 100, and having an electrode terminal 210 of a positive electrode and negative electrode.

The prismatic secondary battery 10 of the first embodiment shown in FIG. 1 is a unidirectional secondary battery in which the electrode terminal 210 of the positive electrode and the negative electrode are disposed together on the upper surface of the case 100, and the cap plate 200 seals the upper surface of the case 100 as the upper surface of the case 100 includes an opening.

The electrode assembly 300 with the unit cells stacked is hermetically sealed within the case 100. A unit cell is a cell with a unit structure of a negative electrode/separator/positive electrode, and a plurality of unit cells are stacked to form a single electrode assembly 300. A typical configuration of a unit cell is described below.

The positive electrode includes a positive electrode current collector and a positive electrode active material applied to one or both sides of the positive electrode current collector. At one end of the positive electrode current collector in the width direction, there is a non-coated part 330 to which no positive electrode active material is applied. By performing a notching (punching) operation on the non-coated part 330, a positive electrode tab 312 is formed.

The negative electrode includes a negative electrode current collector and a negative electrode active material applied to one or both sides of the negative electrode current collector. At one end of the negative electrode current collector in the width direction, there is a non-coated part 330 to which no negative electrode active material is applied. Similarly, the non-coated part 330 of the negative electrode functions as the negative electrode tab 314.

In the first embodiment, the electrode tabs 310, namely the positive electrode tab 312 and the negative electrode tab 314, are located at the same end along the width direction of the electrode assembly 300, namely the height direction of the prismatic secondary battery 10. In the example shown, the positive electrode tab 312 and the negative electrode tab 314 extend toward the upper surface of the prismatic secondary battery 10, and the positive electrode tab 312 and the negative electrode tab 314 are electrically connected to the positive and negative terminals provided on the cap plate 200, respectively.

In the present disclosure, the positive electrode active material coated on the positive electrode current collector and the negative electrode active material coated on the negative electrode current collector can be any active material known in the art.

In one example, the positive electrode active material may include an alkali metal compound represented by the general formula A[AₓM_{y}]O_{2+z} (wherein A includes at least one element selected from Li, Na, and K; M includes at least one element selected from Ni, Co, Mn, Ca, Mg, Al, Ti, Si, Fe, Mo, V, Zr, Zn, Cu, Sc, Ru, and Cr; x ≥ 0, 1 ≤ x+y ≤2, 0.1 ≤ z ≤ 2; wherein the stoichiometric coefficients of the components included in x, y, z, and M are selected such that the compound remains electrically neutral).

In other examples, the positive electrode active material may be an alkali metal compound xLiM¹O₂-(1-x)Li₂M²O₃ (M¹ includes at least one element having an average oxidation state of 3; M² includes at least one element having an average oxidation state of 4; 0≤ x ≤1) as disclosed in US6,677,082, US6,680,143, and the like.

In another example, the positive electrode active material may be represented by general formula LiₐM¹ₓFe₁₋ₓM²_{y}P_{1-y}M³_{z}O_{4-z} (where M¹ includes at least one element selected from Ti, Si, Mn, Co, Fe, V, Cr, Mo, Ni, Nd, Mg, and Al; M² includes at least one element selected from Ti, Si, Mn, Co, Fe, V, Cr, Mo, Ni, Nd, Mg, Al, As, Sb, Si, Ge, V, and S; and M³ includes a halogenated element optionally including F; 0 < a ≤ 2, 0 ≤ x ≤ 1, 0 ≤ y < 1, 0 ≤ z < 1; the stoichiometric coefficients of the components included in a, x, y, z, M¹, M², and M³ are selected such that the compound is electrically neutral), or a lithium metal phosphate represented by Li₃M₂(PO₄)₃ [M includes at least one element selected from Ti, Si, Mn, Fe, Co, V, Cr, Mo, Ni, Mg, and Al].

Preferably, the positive electrode active material may include primary particles and/or secondary particles in which the primary particles are agglomerated.

In one example, the negative electrode active material can be a carbon material, lithium metal or lithium metal compound, silicon or silicon compound, tin or tin compound, or the like. Metal oxides such as TiO₂ and SnO₂ with a potential of less than 2V can also be used as negative electrode active materials. Both low and high crystalline carbon can be used as carbon materials.

In addition, the separator interposed between the positive electrode and the negative electrode can be a porous polymeric film, for example, a porous polymeric film made of a polyolefin-based polymer, such as an ethylene homopolymer, a propylene homopolymer, an ethylene/butene copolymer, an ethylene/hexene copolymer, an ethylene/methacrylate copolymer, and the like, either alone or stacked thereon. As another example, the separator can be a conventional porous nonwoven fabric, for example, a nonwoven fabric made of high melting point glass fibers, polyethylene terephthalate fibers, and the like.

At least one surface of the separator can include a coating layer of inorganic particles. It is also possible for the separator itself to comprise a coating layer of inorganic particles. The particles comprising the coating layer may have a structure coupled to a binder such that an interstitial volume exists between adjacent particles.

The inorganic particles may comprise inorganic materials having a dielectric constant of 5 or greater. As a non-limiting example, the inorganic particles may include at least one material selected from the group consisting of Pb(Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), BaTiO₃, hafnia(HfO₂), SrTiO₃, TiO₂, Al₂O₃, ZrO₂, SnO₂, CeO₂, MgO, CaO, ZnO, and Y₂O₃

In addition, the electrolyte comprising the electrolyte 400 in which the electrode assembly 300 is impregnated may be a salt having a structure such as A⁺B⁻. Here, A⁺ includes ions comprising alkali metal cations such as Li⁺, Na⁺, K⁺⁻, or combinations thereof. And B⁻includes one or more anions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N; CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte can also used by being dissolved in organic solvents. As the organic solvent, propylene carbonate (PC), ethylene carbonate (EC), diethyl carbonate (DEC), dimethyl carbonate (DMC), dipropyl carbonate (DPC), and dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone), or mixtures thereof may be used.

Returning to FIG. 1, the prismatic secondary battery 10 of the present disclosure includes an upper insulator 500 and/or a lower insulator 600. That is, at least one of the upper insulator 500 and the lower insulator 600 is stored within the case 100 along with the electrode assembly 300.

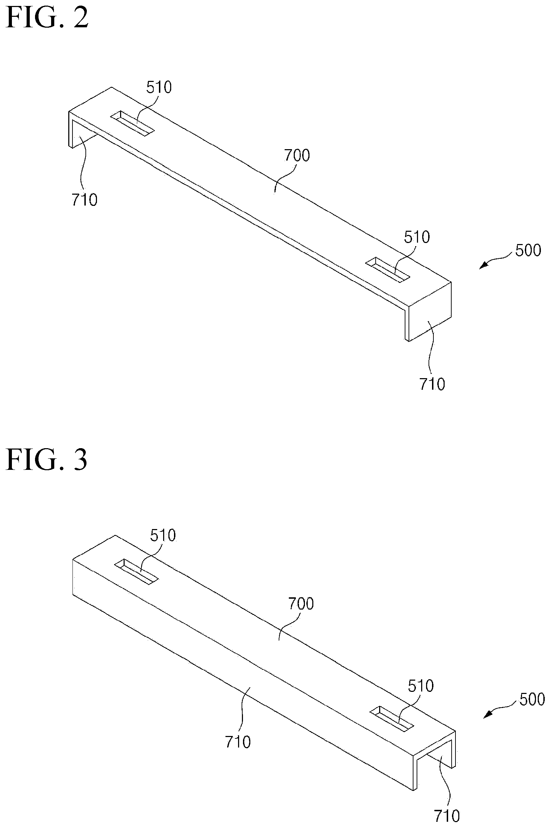

FIGS. 2 through 4 are drawings illustrating various exemplary embodiments of the upper insulator 500. The upper insulator 500 has a shape that integrally occupies the space between the cap plate 200 and the upper surface of the electrode assembly 300, and the space between the case 100 and at least two opposing surfaces among the front, back, and left surfaces of the electrode assembly 300.

As shown in FIG. 1, the upper insulator 500 couples to an upper end part of the electrode assembly 300. The basic shape of the upper insulator 500 includes a base part 700 that corresponds to the upper surface of the electrode assembly 300, and a side part 710 that extend downwardly and are bent at right angles on at least two of the four sides of the base part 700. In other words, the upper insulator 500 has a shape similar to a cover that fits over the upper end part of the electrode assembly 300.

Some clearance exists between the electrode assembly 300 and the case 100 to allow room for electrical connections, the amount of electrolyte 400 required, assembly, etc. The upper insulator 500 serves to fill the gap between the upper part of the electrode assembly 300 and the case 100, and by contacting the case 100, the upper insulator 500 improves the support structure in the upper region of the electrode assembly 300.

The size of the upper insulator 500 is determined by the size of the electrode assembly 300 and the size of the gap between the electrode assembly 300 and the case 100. The size of the base is based on the longitudinal direction (side-to-side direction based on the drawing) cross-sectional area of the electrode assembly 300, and the thickness of the base and side part 710 correspond to the gap between the cap plate 200 and the upper surface of the electrode assembly 300 and the gap between the case 100 and the front, back, left, and right surfaces of the electrode assembly 300, respectively.

Here, the positive electrode tab 312 and negative electrode tab 314 of the electrode assembly 300 protrude from the upper part, so that the upper insulator 500 has a tab hole 510 through which the positive electrode tab 312 and negative electrode tab 314 pass. The positive electrode tab 312 and negative electrode tab 314 passing through the tab hole 510 are electrically connected to the electrode terminals 210 of the positive electrode and negative electrode of the cap plate 200.

Each of the upper insulators 500 in FIGS. 2 through 4 differs in the configuration of the side part 710. The upper insulator 500 of FIG. 2 has a side part 710 disposed on opposite left and right sides of the base, relative to the prismatic secondary battery 10. As such, the upper insulator 500 of FIG. 2 is useful for suppressing side-to-side fluctuations of the electrode assembly 300. In contrast, the upper insulator 500 of FIG. 3 has a side part 710 disposed on front-to-back opposing sides of the base, which can suppress front-to-back fluctuations of the electrode assembly 300.

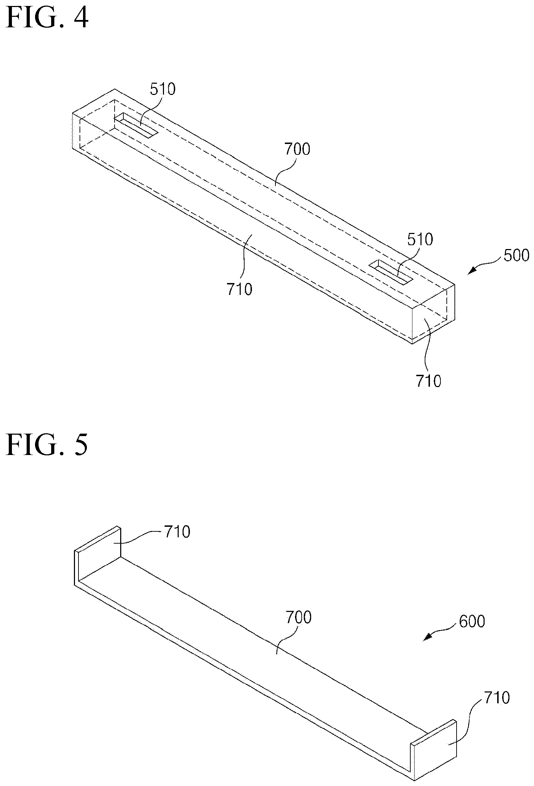

The upper insulator 500 of FIG. 4 has a side part 710 on all four sides of the base, front to back and left to right. Thus, the upper insulator 500 of FIG. 4 can suppress both side-to-side and front-to-back fluctuations of the electrode assembly 300.

Then, FIGS. 5 through 7 are drawings illustrating various exemplary embodiments of the lower insulator 600. The lower insulator 600 is coupled to the lower end part of the electrode assembly 300 and shares much of its structure with the upper insulator 500 described above. The only difference is that the lower insulator 600 does not interfere with the electrode tabs 310 of the electrode assembly 300, so the configuration of the tab hole 510 is not necessarily required.

The lower insulator 600 integrally occupies the space between the bottom surface of the case 100 and the lower surface of the electrode assembly 300, and the space between the case 100 and at least two opposing surfaces of the front, rear, and left and right surfaces of the electrode assembly 300 to fill the gap present at the lower end part of the electrode assembly 300. To this end, the lower insulator 600 includes a base part 700 corresponding to the lower surface of the electrode assembly 300, and a side part 710 bent and extending from at least two of the four sides of the base part 700.

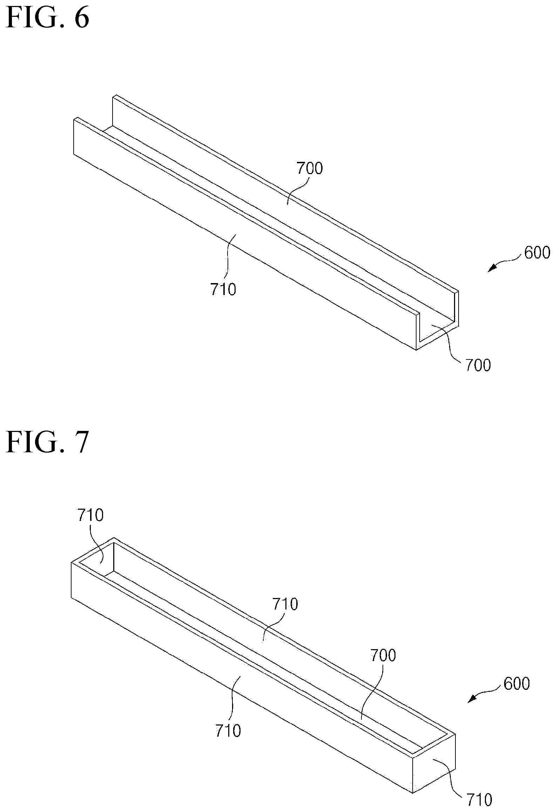

The lower insulator 600 of FIG. 5 has a side part 710 disposed on the left and right opposite sides of the base, relative to the prismatic secondary battery 10, and the lower insulator 600 of FIG. 6 has a side part 710 disposed on the front and back opposite sides of the base. The lower insulator 600 of FIG. 7 corresponds to a combination of the lower insulator 600 of FIGS. 5 and 6, wherein the lower insulator 600 of FIGS. 5 and 6 suppress side-to-side and front-to-back fluctuations of the electrode assembly 300, respectively, and the lower insulator 600 of FIG. 7 suppresses fluctuations in all directions, front-to-back and side-to-side.

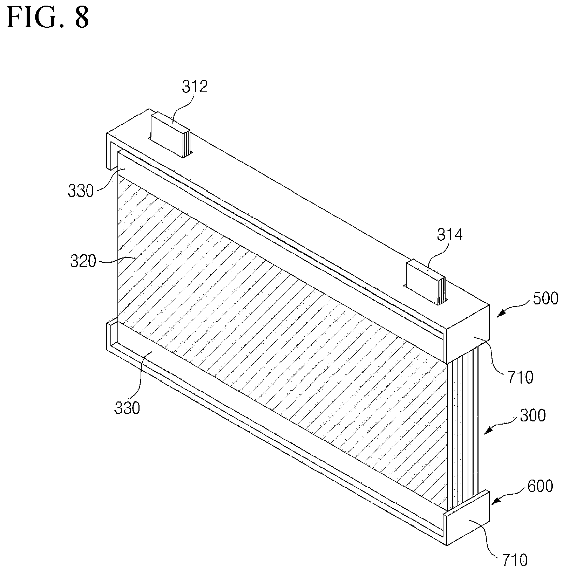

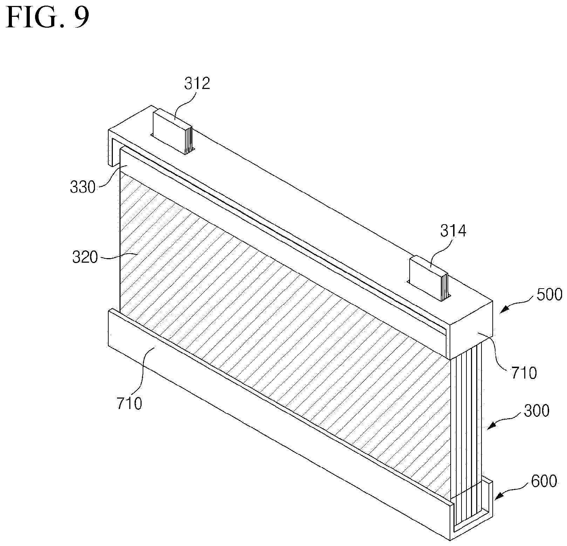

FIGS. 8 and 9 are drawings illustrating an exemplary embodiment in which the upper insulator 500 and the lower insulator 600 are combined. By combining both the upper insulator 500 and the lower insulator 600 in the electrode assembly 300, up-and-down fluctuations are suppressed, and front-to-back and side-to-side fluctuations are suppressed with different results depending on how each exemplary embodiment of the upper insulator 500 and the lower insulator 600 are combined.

For example, in the exemplary embodiment of FIG. 8, which combines the upper insulator 500 of FIG. 2 with the lower insulator 600 of FIG. 5, side-to-side fluctuations are suppressed along with up-and-down fluctuations of the electrode assembly 300. However, fluidity is maintained in the front-to-back direction of the electrode assembly 300.

And, although not shown, it will be self-evident that the combination of the upper insulator 500 of FIG. 3 and the lower insulator 600 of FIG. 6 will suppress front-to-back fluctuations, and the combination of the upper insulator 500 of FIG. 4 and the lower insulator 600 of FIG. 7 will suppress fluctuations in all directions, front-to-back and side-to-side.

Here, it should be noted that it is not necessary to combine the upper insulator 500 of FIG. 4 with the lower insulator 600 of FIG. 7 to suppress front-to-back and side-to-side fluctuations, which is shown in the exemplary embodiment of FIG. 9.

The exemplary embodiment of FIG. 9 is a combination of the upper insulator 500 of FIG. 2 and the lower insulator 600 of FIG. 6, with the upper insulator 500 suppressing side-to-side fluctuations and the lower insulator 600 dividing its role to suppress front-to-back fluctuations. To achieve the same result, the upper insulator 500 of FIG. 3 may be combined with the lower insulator 600 of FIG. 5.

An advantage of the exemplary embodiment of FIG. 9 is that the space occupied by the upper insulator 500 and the lower insulator 600 is minimized, allowing sufficient electrolyte 400 to be injected into the case 100 and reducing the need to increase the size of the case 100 to accommodate the amount of electrolyte 400 injected.

Furthermore, it is desirable to design the upper insulator 500 and the lower insulator 600 so that they do not affect the capacity of the prismatic secondary battery 10. In other words, it is desirable to prevent the upper insulator 500 and/or the lower insulator 600 from substantially reducing the charge and discharge capacity of the electrode assembly 300 by covering the coated part 320, i.e., the area coated with the active material, of the unit cell comprising the electrode assembly 300.

To this end, as shown in FIGS. 8 and 9, the respective side parts 710 of the upper insulator 500 and the lower insulator 600 do not encroach on the coated part 320 of the electrode assembly 300. Since both edges of the positive electrode and negative electrode in the width direction without the active material applied, i.e., the non-coated part 330, have little effect on the charge and discharge of the electrode assembly 300, it would be appropriate to design each side part 710 of the upper insulator 500 and the lower insulator 600 to have a length that does not encroach on the coated part 320.

### Second Embodiment

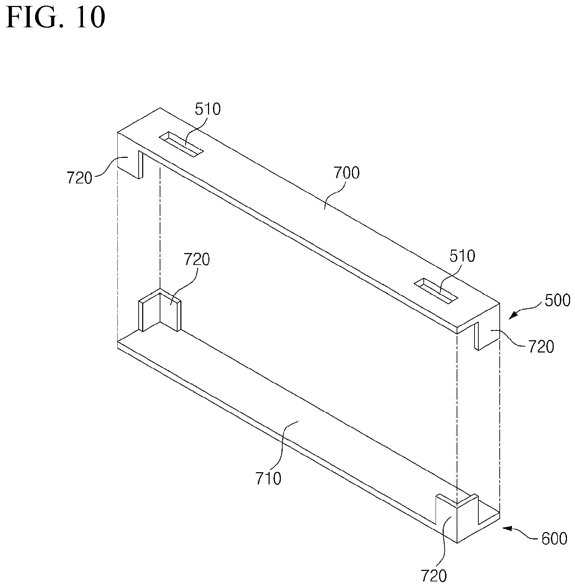

FIG. 10 is a diagram illustrating a second embodiment of an upper insulator 500 and a lower insulator 600.

In the first embodiment described above, the fluctuation direction in which the upper insulator 500 and the lower insulator 600 suppress is determined by the placement of the side part 710. In comparison, the second embodiment can suppress fluctuations of the electrode assembly 300 in both the front-to-back and side-to-side directions, and can improve space utilization inside the case 100 by minimizing the size of the space occupied by the upper insulator 500 and the lower insulator 600.

Referring to FIG. 10, the upper insulator 500 and lower insulator 600, according to the second embodiment, each include a base part 700 corresponding to an upper surface of the electrode assembly 300, and a corner part 720 bent and extending along at least two diagonal corners of the four corners of the base part 700. For reference, as in the first embodiment, the upper insulator 500 is structurally different from the lower insulator 600 only in that the upper insulator 500 is provided with tab holes 510.

As such, the upper insulator 500 and lower insulator 600 of the second embodiment are characterized in that they are provided with a pair or two pairs of corner parts 720, rather than side parts 710. The corner part 720 is formed at the corners where two sides of the base part 700 meet, extend at right angles across the two sides, and are located at at least two diagonal corners. In other words, the upper insulator 500 and lower insulator 600 of FIG. 10 may have one or two pairs of corner part 720, and in the exemplary embodiment shown, have one pair of corner part 720.

According to the second embodiment of the upper insulator 500 and lower insulator 600, each corner part 720 bent and extending along the diagonal corners of the base part 700 can support two orthogonal surfaces of the electrode assembly 300, thereby suppressing the fluctuations of the electrode assembly 330 in all directions, front-to-back and side-to-side.

In this second embodiment, the suppression of fluctuations in all directions, front-to-back and side-to-side, is also possible with the first embodiment described above, but has the advantage of significantly reducing the space occupied by the corner part 720. Due to the reduced space of the corner part 720, the second embodiment is advantageous in terms of space utilization within the case 100 with respect to the injection amount of the electrolyte 400, the capacity of the electrode assembly 300, and the like.

And, in the second embodiment, the corner part 720 of the upper insulator 500 and the lower insulator 600 are preferably designed so as not to encroach on the coated part 320 of the electrode assembly 300, thereby not affecting the substantial capacity of the electrode assembly 300.

Furthermore, the upper insulator 500 and the lower insulator 600 may be made of a material that expands in response to contact with the electrolyte 400 filled in the case 100. That is, the upper insulator 500 and the lower insulator 600 may be made of a material that expands in length or volume in response to contact with a fluid such as the electrolyte 400.

By making the upper insulator 500 and lower insulator 600 from such an expansive material, the size of the upper insulator 500 and lower insulator 600 in their initial state without contact with the electrolyte 400 can be made slightly smaller, thereby improving the ease of assembly at which the electrode assembly 300 coupled with the combined upper insulator 500 and lower insulator 600 is stored within the case 100.

The material of these upper insulator 500 and lower insulator 600 can be any material that has the property of expanding upon liquid contact. In one example, materials including urethane bonds, ester bonds, or ether bonds, or including cellulose ester compounds can be used. Examples of such materials include acrylate-based materials, urethane-based materials, epoxy-based materials, or cellulose-based materials.

When the upper insulator 500 and the lower insulator 600, which have expansion characteristics, are stored in the case 100 with the electrode assembly 300, there is initially a gap between the cases 100, but as they expand in contact with the electrolyte 400, they fill the gap, thereby effectively suppressing the front-to-back and side-to-side fluctuations acting on the electrode assembly 300.

### Third Embodiment

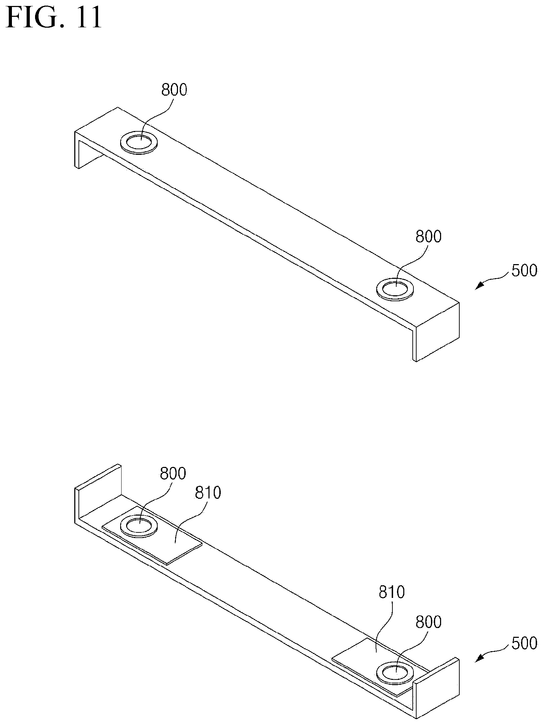

FIG. 11 is a diagram illustrating a third embodiment of the upper insulator 500, and FIG. 11 shows a top view and a bottom view of the upper insulator 500.

Referring to FIG. 11, the upper insulator 500 of the third embodiment includes an electrode connecting part 800 penetrating through a base part 700 corresponding to an upper surface of the electrode assembly 300, and the electrode connecting part 800 is electrically connected to a tab connecting part 810 provided on an inner surface of the base part 700. Here, the tab connecting part 810 is disposed opposite the electrode tabs 310 of the electrode assembly 300.

The third embodiment differs in that it includes electrode connecting part 800 and tap connecting part 810 instead of the tab holes 510 provided in the upper insulator 500 of the first and second embodiments. Both the electrode connecting part 800 and the tap connecting part 810 are made of a conductive material, through which the electrode tabs 310 of the electrode assembly 300 and the electrode terminals 210 of the cap plate 200, which are separated from each other by the upper insulator 500, are electrically connected to each other.

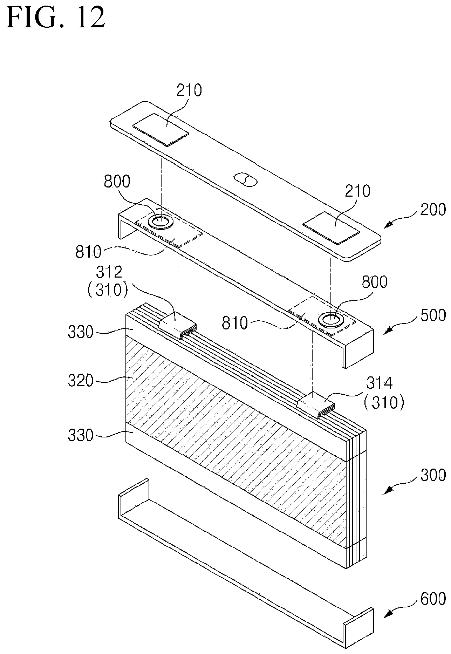

FIG. 12 is a diagram illustrating a structure in which an electrode terminal 210 and electrode tab 310 are coupled to the upper insulator 500 of FIG. 11. Corresponding to the electrode terminals 210 and electrode tabs 310 being provided with two polarities, positive and negative, respectively, electrode connecting part 800 and tab connecting part 810 are also provided in pairs, respectively, with the paired electrode connecting part 800 and tab connecting part 810 electrically connected to the electrode terminal 210 and electrode tab 310 of the same polarity, respectively.

For reference, while the upper insulator 500 of FIGS. 11 and 12 is illustrated with respect to the upper insulator 500 of FIG. 2 with the side part 710 disposed on left and right opposing sides of base 700, this is by way of illustration only, and the configuration of electrode connecting part 800 and tab connecting part 810 may be adapted for any exemplary embodiment of the upper insulator 500 described above.

Various principles and features have been described in more detail above with reference to the drawings and embodiments. However, it is to be understood that the configurations shown in the drawings or embodiments described herein are various embodiments and do not represent all of the technical ideas therein, and that there may be various equivalents and modifications that may replace them at the time of filing the present application.

### Reference numerals

| | | | |
|---|---|---|---|
| 10: | PRISMATIC SECONDARY BATTERY | 100: | CASE |
| 200: | CAP PLATE | 210: | ELECTRODE TERMINAL |
| 300: | ELECTRODE ASSEMBLY | 310: | ELECTRODE TAB |
| 312: | POSITIVE ELECTRODE TAB | | |
| 314: | NEGATIVE ELECTRODE TAB | | |
| 320: | COATED PART | 330: | NON-COATED PART |
| 400: | ELECTROLYTE | 500: | UPPER INSULATOR |
| 510: | TAB HOLE | 600: | LOWER INSULATOR |
| 700: | BASE PART | 710: | SIDE PART |
| 720: | CORNER PART | | |
| 800: | ELECTRODE CONNECTING PART | | |
| 810: | TAB CONNECTING PART | | |

## Claims

1. A prismatic secondary battery comprising:
a case including an opening;
an electrode assembly stored within the case; and
a cap plate coupled to the opening in the case, and having electrode terminals of a positive electrode and a negative electrode, and is provided with at least one of:
an upper insulator occupying a first space between the cap plate and an upper surface of the electrode assembly, and a second space between the case and at least two opposing surfaces among front, back, left and right surfaces of the electrode assembly, and
a lower insulator occupying a third space between a bottom surface of the case and a lower surface of the electrode assembly, and a fourth space between the case and at least two opposing surfaces among the front, back and left surfaces of the electrode assembly.

2. The prismatic secondary battery of claim 1, wherein
the upper insulator and the lower insulator suppress at least one of front-to-back fluctuations and side-to-side fluctuations of the electrode assembly, respectively.

3. The prismatic secondary battery of claim 2, wherein
one of the upper insulator and the lower insulator suppresses front-to-back fluctuations of the electrode assembly and the other suppresses side-to-side fluctuations.

4. The prismatic secondary battery of claim 2, wherein
the upper insulator and the lower insulator suppress at least one of front-to-back fluctuations and side-to-side fluctuations of the electrode assembly.

5. The prismatic secondary battery of claim 2, wherein
the upper insulator comprises:
a base part corresponding to the upper surface of the electrode assembly, and a side part bent and extending from at least two sides of the base part.

6. The prismatic secondary battery of claim 5, wherein
the side part of the upper insulator does not encroach on a coated part of the electrode assembly.

7. The prismatic secondary battery of claim 2, wherein
the lower insulator comprises:
a base part corresponding to the lower surface of the electrode assembly, and a side part bent and extending from at least two sides of the base part.

8. The prismatic secondary battery of claim 7, wherein
the side part of the lower insulator does not encroach on a coated part of the electrode assembly.

9. The prismatic secondary battery of claim 2, wherein
the upper insulator comprises:
a base part corresponding to the upper surface of the electrode assembly, and a corner part bent and extending along at least two diagonal corners of the base part.

10. The prismatic secondary battery of claim 9, wherein
the corner part of the upper insulator does not encroach on a coated part of the electrode assembly.

11. The prismatic secondary battery of claim 2, wherein
the lower insulator comprises:
a base part corresponding to the lower surface of the electrode assembly, and a corner part bent and extending along at least two diagonal corners of the base part.

12. The prismatic secondary battery of claim 11, wherein
the corner part of the lower insulator does not encroach on a coated part of the electrode assembly.

13. The prismatic secondary battery of claim 1, wherein
the upper insulator and the lower insulator are composed of a material that expands by contacting with an electrolyte in the case.

14. The prismatic secondary battery of claim 1, wherein
the upper insulator is provided with an electrode connecting part penetrating through a base part corresponding to the upper surface of the electrode assembly, wherein:
the electrode connecting part is electrically connected with a tab connecting part that is provided on an inner surface of the base part and disposed opposing an electrode tab of the electrode assembly.

15. The prismatic secondary battery of claim 14, wherein
the electrode connecting part and the tab connecting part are each provided in a pair, and
the paired electrode connecting part and the tab connecting part are electrically connected to electrode terminals and electrode tabs, respectively, of a same polarity.
